# EUROPEAN PATENT SPECIFICATION

(11) **EP 1 896 735 B1**
(45) Date of publication and mention of the grant of the patent: **14.11.2012**
(21) Application number: 06795066.7
(22) Date of filing: 30.06.2006
(51) Int. Cl.: F16B 21/08

(54) **RETAINING PIN, IN PARTICULAR FOR FIXING AN AUTOMOTIVE FINISHING ELEMENT**
HALTESTIFT, INSBESONDERE ZUM BEFESTIGEN EINES AUTOMOBIL-ABSCHLUSSELEMENTS
TIGE DE RETENUE, DESTINEE EN PARTICULIER A FIXER UN ELEMENT DE FINITION AUTOMOBILE

(30) Priority: 30.06.2005 IT TO20050458
(43) Date of publication of application: 12.03.2008
(73) Proprietor: ITW Automotive Italia S.r.l. con Unico Socio, 10156 Torino (IT)
(72) Inventor: GIRODO, Franco, I-10156 Torino (IT)
(74) Representative: Jorio, Paolo
(86) International application number: PCT/IB2006/001816
(87) International publication number: WO 2007/004023

(56) References cited:
- EP-A1- 1 526 040
- US-A- 4 402 641
- US-A- 5 039 267

## Description

### TECHNICAL FIELD

The present invention relates to a retaining pin made of synthetic plastic material for use in the automotive field for fixing finishing elements to the bodywork of a motor vehicle, the finishing elements usually also made of synthetic plastic material, such as, in particular, a heel plate, a luggage plate or a pillar cover.

### BACKGROUND ART

It is known that finishing elements of the type indicated above are fixed to the vehicle bodywork by means of retaining pins essentially of the same type as those used for fixing side panels and upholstery, including a head couplable in a seat of the finishing element and a shank provided with retaining means for snappingly coupling with a locking seat (hole or slot) in the vehicle body.

However, due to their assembly position, the finishing elements of the indicated type may be subject in use to high stress, amplified by the relatively long length of the finishing elements themselves. Furthermore, in order to facilitate the assembly operations and avoid annoying noises in use, the retaining pins should be capable of compensating possible misalignments between bodywork and finishing elements due to the relatively high machining tolerance of the bodywork.

The retaining pins of the known type are either not capable of satisfying such needs or are so only in part. In particular, when the structure of the pins, in particular of the retaining means, is such to allow a certain compensation of misalignments, the retaining force exerted by the pin is reduced, which may lead, in use, on the long term to the partial detachment of the finishing element to be retained. If the pin structure is such to exert a sufficiently high retaining force, it is conversely impossible, or at least complex, to obtain misalignment compensation, with consequent assembly difficulties.

A known retaining pin model also includes a suction cap-shaped flange radially and protrudingly carried by the shank in a position adjacent to, facing and distanced from the head. On one hand, the flange has the purpose of exerting a certain protective action on the bodywork, by reducing the possibility of external contaminants (humidity, dust, mud) from reaching inside the bodywork boxing (with the risk of producing corrosive phenomena) through the retaining pin locking seats made in the bodywork; on the other hand, the flange reduces/compensates the clearance which can result after assembly between finishing elements and bodywork, due to machining tolerances.

The document US 4402641 is considered to represent the most relevant state of the art and discloses a retaining pin according to the preamble of claim 1.

### DISCLOSURE OF INVENTION

It is the object of the present invention to cbviate the described drawbacks, by providing a retaining pin for fixing an automotive finishing element, i.e. intended to be assembled on the bodywork of a motor vehicle, capable of exerting a high retaining force and allowing at the same time an easy, rapid and clearance-free assembly of the finishing element, also in the presence of misalignments due to bodywork machining tolerances. It is also the object of the present invention to provide a retaining pin of the aforesaid type capable of ensuring appropriate protection from external contaminants to the bodywork by allowing, after assembly, to essentially and fluid-tightly seal the locking seats of the pins on the bodywork, and at the same time to reduce the possible annoying noise due to vibrations during vehicle travel, all ensuring at the same time low manufacturing and assembly costs, as well as reduced bulk and weight of the pin itself.

The present invention therefore relates to a retaining pin for fixing an automotive finishing element, as defined in claim 1.

Hereinafter, the term "automotive" must be understood as merely indicative and non-restrictive, therefore including any type of vehicle.

In particular, the retaining pin according to the invention comprises a head couplable in a seat of the finishing element, a shank provided with retaining means for snappingly coupling with a locking seat on the vehicle bodywork, and an elastically deformable suction cap-shaped flange radially and protrudingly carried by the shank, arranged facing the head and removed from the head by a predetermined quantity, the head being provided with slanted plane means. The shank is shaped as a double T cross-section longitudinal member and comprises two wings connected together along the middle line and by a reciprocally perpendicular rib, while retaining means consist of a plurality of elastically deformable fins extending from opposite sides and radially protruding from the shank rib parallelly to said wings, from which they are laterally spaced apart.

The slanted plane means consist in two thicker opposite radial portions of the head overhangingly protruding from the shank parallelly to the flange and having a flared conformation; the fins and the wings overhangingly protrude from the rib in the same direction, the fins protruding more than the wings.

In particular, the length of the wings, parallelly to the aforementioned direction along which the wings overhangingly protrude from the rib, is shorter by a first predetermined quantity than a transversal dimension of the shank locking seat on the bodywork, while the length of said fins, again parallelly to the mentioned direction, is longer by a second predetermined quantity than said transversal dimension of the shank locking seat.

The fins are tapered towards the free end and are delimited by two opposite faces, a first facing the opposite side of the head and oriented obliquely to the longitudinal axis of symmetry of the rib by a predetermined angle (for example from 5° to 10° and, preferably, equal to approximately 7°), and a second, facing the head, oriented perpendicularly to the axis of symmetry of the rib.

In this way, it is ensured both easy prefitting of the retaining pin on the fixed finishing element, and an easy insertion of the shank in its bodywork seat, combined with the possibility of essentially automatic recovery (i.e. without a specific intervention by the operator) of the possibly present clearance between bodywork and finishing element, thanks to the combination of retaining means constituted by a plurality of fins with the presence of an elastically deformable flange arranged on the base of the shank, an edge of the flange axially extending towards the free end of the shank, to at least a pair of opposite fins.

The particular conformation of the fins and of the shank further allows to increase the retaining load, while maintaining a relatively low inserting load, ensuring efficient retaining of the finishing element, also over time.

Furthermore, thanks to the described structure, fins and suction cap flange may operate as elastic elements which tension each other reciprocally in contrast on the bodywork through the rib of the shank ensuring not only clearance-free fixing, but also above all, an effective fluid-tight coupling of the edge of the suction cap flange with the surface of the bodywork surrounding the locking seat of the shank, which is thus effectively and efficiently protected.

Finally, the particular conformation of the head, i.e. of the wedge means in the case in point, ensures an easier and more effective assembly of the head in the prefitting seat of the retaining element to be fixed; in particular, the thicker radial portions of the head having flared conformation are connected to a central portion of the head, arranged aligned with said shank on the side of its thinner root end, so as to operate as elastically deformable engagement elements for fixing the pin on the finishing elements, in contrast with the flange.

### BRIEF DESCRIPTION OF THE DRAWINGS

Further features and advantages of the present invention will be apparent in the following description of a non-limitative example of embodiment, with reference to the accompanying drawing, in which:
- figure 1 schematically shows a perspective three-quarters elevated view of a retaining pin made according to the invention;
- figure 2 shows an elevated orthogonal view of the retaining pin in figure 1;
- figure 3 shows a cross-section view taken along a track plane III-III of the retaining pin in figure 2; and
- figure 4 shows a top plan view of the retaining pin in figure 1-3.

### BEST MODE FOR CARRYING OUT THE INVENTION

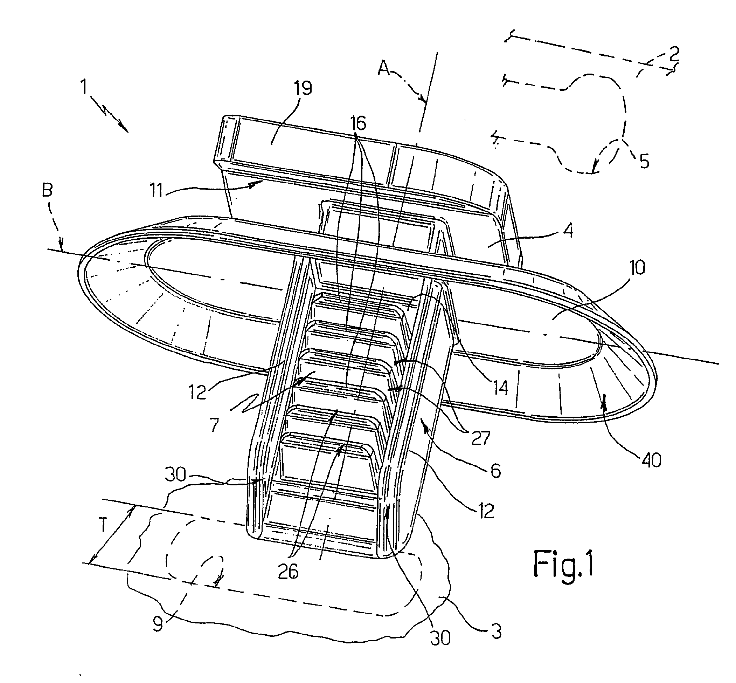

With reference to figures from 1 to 4, it is indicated as a whole by 1 a retaining pin for fixing an automotive finishing element 2, of any known type, only schematically shown with a dotted line, on a bodywork 3 of a vehicle of any type; pin 1 comprises a head 4 couplable in use with a seat 5 (schematically shown with a dotted line in figure 1) of the finishing element 2, and a shank 6 provided with retraining means 7 for snappingly coupling with a locking seat 9 (also only schematically shown with a dotted line in figure 1) of pin 1 on the vehicle bodywork 3.

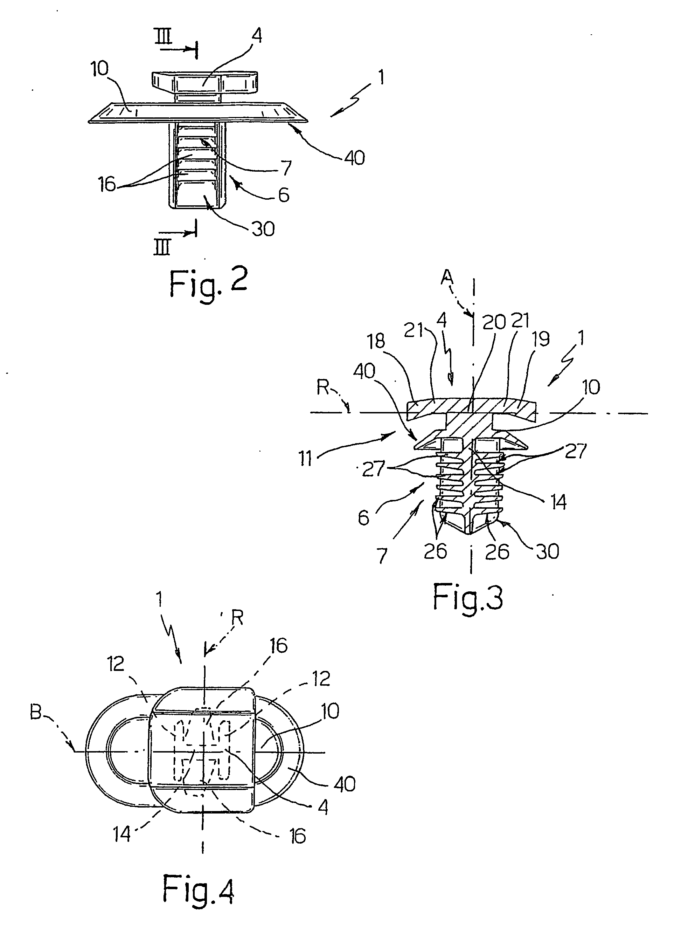

The retaining pin 1 according to the invention further comprises an elastically deformable suction cap-shaped flange 10 carried radially and protrudingly from the shank 6, arranged facing the head 4 and spaced apart from the head 4 by a predetermined quantity, the head provided on the part facing the flange 10 with slanted plane coupling means 11 (figure 1 and 3).

The shank 6 is shaped as a longitudinal member having a double T cross-section, in the case in point exclusively constituted by two wings or plates 12 (figure 4) reciprocally connected along a middle line by a reciprocally perpendicular rib 14; in combination with such shape of the shank 6, the retaining means 7 consist of a plurality of elastically deformable fins or tabs 16 extending from opposite bands radially protruding from the rib 14 of the shank 6 parallelly to the wings 12, from which they are laterally spaced apart, so that each wing 16 constitutes an independent, elastically deformable shelf element.

The retaining pin 1 is integrally made by moulding of synthetic plastic material, and the slanted plane means 11 consist in two thicker opposite radial portions 18, 19 (figure 3) of the head 4 protrudingly extending from the shank 6 parallelly to the flange 10 and having (in the section of figure 3) wedge conformation.

The tapered and flared thicker radial portions 18,19 of the head 4 are connected to a central portion 20 of the head, arranged aligned with the shank 6, each by the side of an its own thinner root end 21 (figure 3).

The fins 16 and the wings 12 overhangingly protrude from the rib 14 in the same direction, but the fins 16 protrude more than the wings 12 (figures 3 and 4). In particular, the length of the wings 12, parallelly to the direction along which they overhangingly protrude from the rib 14, is shorter by a first predetermined quantity (for example by a few tenths of a millimetre) to a transversal dimension T (figure 1) of the locking seat 9 of the shank 6 on the bodywork 3, while the length of the fins 16, again parallelly to the aforementioned same direction, is longer by a predetermined second quantity (also in the order of a few tenths of a millimetre) to the transversal direction T of the locking seat 9 of the shank 6.

In order to obtain the better retaining effect with the highest insertion facility, the second predetermined quantity is chosen so as to be in absolute terms larger than the first determined quantity, the ratio between the first predetermined quantity and the second predetermined quantity being from approximately one tenth to approximately one fourth, and being preferably equal to approximately one sixth.

The fins 16 are tapered towards the free end and are delimited between two opposite faces; a first face 26, facing to a side opposite to that of the head 4, is obliquely disposed with respect to a longitudinal axis of symmetry A of the rib 14; a second face 27, facing the head 4, is conversely oriented perpendicularly to the axis of symmetry A of the rib 14. The fins 16 are made in pairs along the rib 14, protruding from opposite sides of the same and the faces 26 all form a predetermined angle with the axis A, for example from 5° to 10°, and preferably equal to approximately 7°.

The wings 12 end on opposite sides of the head 4 each with a V-shaped edge 30, whose vertex is arranged at an end of the rib 14 opposite the head 4 and integrally made with the V-shaped edge 30.

The suction cap-shaped flange 10 presents in plan (figures 1 and 4) an oval shape having a longer extension axis B oriented, with respect to shank 6, perpendicularly to an extension radial direction R of the slanted plane means 11, schematically shown in form of an axis in figures 3 and 4, direction R which coincides with the protruding extension direction of the rib 14 of fins 16 and wings 12.

The suction cap-shaped flange 10 is delimited by a peripheral edge 40 which axially extends towards the free end of the shank 6 (i.e. towards the edges 30), at least to a first opposite pair of fins 16 arranged more closely to the head 4, so as to ensure in use the simultaneous tensioning, with pin 1 fitted in seat 9, both of the fins 16 which are snappingly coupled with the edge of the seat 9 and beyond the same, in the transversal direction T, and the flange 10, whose edge 40 abuttingly rests against the bodywork 3 producing a partial elastic flexion of the flange 10.

Thanks to the described structure, it is apparent that in use pin 1 of the invention is adapted to being easily prefitted on the finishing element 2, a pin 1 in each seat 5, by means of the head 4, while the undercut formed by the thickened and flared portions 18, 19, prevents the extraction thereof from the seat 5; the portions 18, 19 further exert an elastic adaptation action for possible dimensional errors.

The plurality of pairs of fins 16 made at regularly intervals along the axial extension of the shank 6 allows to recover possible clearance and, along with the conformation of the edge 40 of the flange 10, allows to constantly ensure an optimal, forced coupling between the edge 40 and the bodywork 3 all around the seats 9.

## Claims

1. A retaining pin (1) comprising a head (4) couplable in a seat (5) of an automotive finishing element (2), and a shank (6) provided with retaining means (7) for snappingly engaging a locking seat (9) on the bodywork (3) of a vehicle, the shank (6) being shaped as a longitudinal member with a double T cross-section and including two wings (12) reciprocally connected along the middle line by a reciprocally perpendicular rib (14), the retaining means (7) consisting of a plurality of elastically deformable fins (16) radially and overhangingly extending from opposite sides from the shank rib (14) and parallel to said wings (12), from which they are laterally spaced apart; **characterised in that** it further comprises an elastically deformable flange (10), shaped as a suction cap, radially and overhangingly carried by the shank (6) arranged facing the head (4) and spaced apart therefrom by a predetermined quantity, the head (4) being provided with slanted plane means (11); said slanted plane means (11) consisting of two opposite thickened radial portions (18,19) of the head (4) overhangingly extending from the shank (6) parallelly to the flange (10) and with a flared wedge conformation; said suction cap-shaped flange (10) being defined by a peripheral edge which extends axially towards the free end of the shank (6), to at least one pair of said opposite fins (16); and said radial thickened portions (18,19) of the head (4) with a flared wedge conformation being connected to a central portion (20) of the head (4), arranged aligned with said shank (6), by the side of their own thinner root end (21).

2. A pin (1) according to claim 1, **characterised in that** said fins (16) and said wings (12) overhangingly protrude from said rib (14) in the same direction, said fins (16) protruding more than said wings (12).

3. A pin (1) according to claim 2, **characterised in that** the length of said wings (12), parallelly to said direction along which they overhangingly protrude from the rib (14), is shorter by a first predetermined quantity than a transversal dimension of the locking seat (9) of the shank (6) on the bodywork, while the length of said fins (16), again parallelly to said same direction, is longer by a second predetermined quantity than said transversal dimension of the shank locking seat (9).

4. A pin (1) according to claim 3, **characterised in that** said second predetermined quantity is larger than said first predetermined quantity.

5. A pin (1) according to claim 4, **characterised in that** the ratio between said first predetermined quantity and said second predetermined quantity is from approximately one tenth to approximately one fourth, and is preferably equal to approximately one sixth.

6. A pin (1) according to one of the preceding claims, **characterised in that** said fins (16) are tapered towards the free end and are defined by two opposite sides, a first (26) facing the side opposite to said head (4), which is oriented obliquely to the longitudinal symmetry axis of said rib (14), and a second (27), facing the head (4), oriented perpendicularly to said symmetry axis of the rib (14).

7. A pin (1) according to one of the preceding claims, **characterised in that** said wings (12) end on the side opposite to said head (4) with a V shaped edge (30), whose vertex is arranged at one end of said rib (14) made integrally with said V edge.

8. A pin (1) according to one of the preceding claims, **characterised in that** said suction cup shaped flange (10) presents in a plan view an oval shape with an axis of longer extension, with respect to said shank (6), perpendicular to a radial direction of extension of said slanted plane means (11).

9. A pin (1) according to one of the preceding claims, **characterised in that** it has been made by moulding of synthetic plastic material.

## Patentansprüche

1. Haltestift (1), der einen Kopf (4), der in einen Sitz (5) eines Automobil-Abschlusselements (2) koppelbar ist, und einen Schaft (6), der mit Haltemitteln (7) zum Rasteingriff mit einem Verriegelungssitz (9) an der Karosserie (3) eines Fahrzeugs versehen ist, umfasst, wobei der Schaft (6) als ein längliches Glied mit einem Doppel-T-Querschnitt geformt ist und zwei Flügel (12) enthält, die durch eine reziprok senkrechte Rippe (14) reziprok entlang der Mittellinie verbunden sind, wobei die Haltemittel (7) aus mehreren elastisch verformbaren Finnen (16) bestehen, die sich radial und vorkragend von einander gegenüberliegenden Seiten von der Schaftrippe (14) und parallel zu den Flügeln (12), von denen sie lateral beabstandet sind, erstrecken, **dadurch gekennzeichnet, dass** er weiterhin einen elastisch verformbaren Flansch (10) umfasst, der als eine Saugkappe geformt ist, radial und vorkragend von dem Schaft (6) getragen wird und dem Kopf (4) zugekehrt und in einem Abstand um ein vorbestimmtes Ausmaß davon angeordnet ist, wobei der Kopf (4) mit Mitteln (11) mit schiefer Ebene versehen ist; wobei die Mittel (11) mit schiefer Ebene aus zwei einander gegenüberliegenden, verdickten, radialen Abschnitten (18, 19) des Kopfs (4) bestehen, die sich vorkragend von dem Schaft (6) parallel zu dem Flansch (10) mit einer kelchförmig aufgeweiteten Keilform erstrecken; wobei der saugkappenförmige Flansch (10) durch einen Umfangsrand definiert wird, der sich axial in Richtung des freien Endes des Schafts (6) zu mindestens einem Paar der einander gegenüberliegenden Finnen (16) erstreckt; und die radialen verdickten Abschnitte (18, 19) des Kopfs (4) mit einer kelchförmig aufgeweiteten Keilform neben ihrem eigenen dünneren Fußende (21) mit einem auf den Schaft (6) ausgerichtet angeordneten mittleren Abschnitt (20) des Kopfs (4) verbunden sind.

2. Stift (1) nach Anspruch 1, **dadurch gekennzeichnet, dass** die Finnen (16) und die Flügel (12) vorkragend von der Rippe (14) in der gleichen Richtung überstehen, wobei die Finnen (16) weiter überstehen als die Flügel (12).

3. Stift (1) nach Anspruch 2, **dadurch gekennzeichnet, dass** die Länge der Flügel (12) parallel zu der Richtung, entlang der sie von der Rippe (14) vorkragend überstehen, um ein erstes vorbestimmtes Ausmaß kürzer ist als eine Querabmessung des Verriegelungssitzes (9) des Schafts (6) an der Karosserie, während die Länge der Finnen (16) wieder parallel zu der gleichen Richtung um ein zweites vorbestimmtes Ausmaß länger ist als die Querabmessung des Schaftverriegelungssitzes (9).

4. Stift (1) nach Anspruch 3, **dadurch gekennzeichnet, dass** das zweite vorbestimmte Ausmaß größer ist als das erste vorbestimmte Ausmaß.

5. Stift (1) nach Anspruch 4, **dadurch gekennzeichnet, dass** das Verhältnis zwischen dem ersten vorbestimmten Ausmaß und dem zweiten vorbestimmten Ausmaß zwischen ca. einem Zehntel und ca. einem Viertel liegt und vorzugsweise gleich ca. einem Sechstel ist.

6. Stift (1) nach einem der vorhergehenden Ansprüche, **dadurch gekennzeichnet, dass** die Finnen (16) in Richtung des freien Endes konisch zulaufen und durch zwei einander gegenüberliegende Seiten definiert sind, eine erste (26), die der dem Kopf (4) gegenüberliegenden Seite zugekehrt und schräg zu der Längssymmetrieachse der Rippe (14) ausgerichtet ist, und eine zweite (27), die dem Kopf (4) zugekehrt und senkrecht zur Symmetrieachse der Rippe (14) ausgerichtet ist.

7. Stift (1) nach einem der vorhergehenden Ansprüche, **dadurch gekennzeichnet, dass** die Flügel (12) auf der Seite gegenüber dem Kopf (4) mit einem V-förmigen Rand (30) enden, dessen Scheitel an einem Ende der Rippe (14) angeordnet ist, das integral mit dem V-Rand ausgebildet ist.

8. Stift (1) nach einem der vorhergehenden Ansprüche, **dadurch gekennzeichnet, dass** der saugkappenförmige Flansch (10) in Draufsicht eine ovale Form aufweist, deren Achse bezüglich des Schafts (6) senkrecht zu einer radialen Erstreckungsrichtung der Mittel (11) mit schiefer Ebene eine längere Erstreckung aufweist.

9. Stift (1) nach einem der vorhergehenden Ansprüche, **dadurch gekennzeichnet, dass** er durch Formen aus synthetischem Kunststoffmaterial hergestellt ist.

## Revendications

1. Goupille de retenue (1) comprenant une tête (4) pouvant être accouplée à un siège (5) d'un élément de garnissage automobile (2) et une tige (6) dotée d'un moyen de retenue (7) pour enclencher par pression un siège de verrouillage (9) sur la carrosserie (3) d'un véhicule, la tige (6) étant en forme d'élément longitudinal ayant une section transversale en double T et comprenant deux taquets (12) reliés mutuellement le long de la ligne médiane par une nervure mutuellement perpendiculaire (14), les moyens de retenue (7) consistant en une pluralité d'ailettes élastiquement déformables (16) s'étendant radialement et en surplomb à partir des côtés opposés des nervures de la tige (14) et parallèlement auxdits taquets (12), dont elles sont espacées latéralement ; **caractérisée en ce que** ladite goupille de retenue comprend en outre une bride élastiquement déformable (10), en forme de ventouse, portée radialement et en surplomb par la tige (6) disposée face à la tête (4) et espacée de celle-ci d'une distance prédéterminée, la tête (4) étant dotée de moyens de plans inclinés (11) ; lesdits moyens de plans inclinés (11) étant constitués de deux parties radiales opposées plus épaisses (18, 19) de la tête (4) s'étendant en surplomb à partir de la tige (6) parallèlement à la bride (10) et avec une configuration en forme de coin évasé ; ladite bride en forme de ventouse (10) étant définie par un bord périphérique qui s'étend axialement vers l'extrémité libre de la tige (6), jusqu'à au moins une paire desdites ailettes opposées (16) ; et lesdites parties radiales plus épaisses (18, 19) de la tête (4) qui ont une configuration en forme de coin évasé étant reliées à une partie centrale (20) de la tête (4), disposée en alignement avec ladite tige (6) par le coté de l'extrémité plus fine de leur propre pied d'ailette (21).

2. Goupille (1) selon la revendication 1, **caractérisée en ce que** lesdites ailettes (16) et lesdits taquets (12) dépassent en surplomb de ladite nervure (14) dans la même direction, lesdites ailettes (16) dépassant davantage que lesdits taquets (12).

3. Goupille (1) selon la revendication 2, **caractérisée en ce que** la longueur desdits taquets (12) mesurée parallèlement à ladite direction le long de laquelle ils dépassent en surplomb de la nervure (14), est plus courte d'une première valeur prédéterminée qu'une dimension transversale du siège de verrouillage (9) de la tige (6) sur la carrosserie, tandis que la longueur desdites ailettes (16), également mesurée parallèlement à la même direction, est plus longue d'une deuxième valeur prédéterminée que ladite dimension transversale du siège de verrouillage (9) de la tige.

4. Goupille (1) selon la revendication 3, **caractérisée en ce que** ladite deuxième valeur prédéterminée est plus grande que ladite première valeur prédéterminée.

5. Goupille (1) selon la revendication 4, **caractérisée en ce que** le rapport entre ladite première valeur prédéterminée et ladite deuxième valeur prédéterminée est compris entre environ un dixième et environ un quart, et qu'il est préférablement égal à environ un sixième.

6. Goupille (1) selon l'une quelconque des revendications précédentes, **caractérisée en ce que** lesdites ailettes (16) sont effilées vers l'extrémité libre et sont définies par deux côtés opposés, un premier (26) faisant face au côté opposé à ladite tête (4), qui est orienté obliquement par rapport à l'axe symétrique longitudinal de ladite nervure (14), et un deuxième (27), faisant face à la tête (4), qui est orienté perpendiculairement audit axe symétrique de la nervure (14).

7. Goupille (1) selon l'une quelconque des revendications précédentes, **caractérisée en ce que** lesdits taquets (12) se terminent sur le côté opposé à ladite tête (4) par une extrémité ayant une forme trapézoïdale (30) dont le sommet est disposé à une extrémité de ladite nervure (14) et réalisé intégralement avec ledit bord trapézoïdal.

8. Goupille (1) selon l'une quelconque des revendications précédentes, **caractérisée en ce que** ladite bride en forme de ventouse (10) présente, vu en plan, une forme ovale dont l'axe le plus long, par rapport à ladite tige (6), est perpendiculaire à ladite direction radiale du prolongement desdits moyens de plan incliné (11).

9. Goupille (1) selon l'une quelconque des revendications précédentes, caractérisée à ce qu'elle a été fabriquée par moulage de matière plastique synthétique.
